# EUROPEAN PATENT APPLICATION

(11) **EP 3 382 260 A1**
(43) Date of publication of application: **03.10.2018**
(21) Application number: 17168908.6
(22) Date of filing: 02.05.2017
(51) Int. Cl.: F21S 2/00, A01G 7/04, F21V 21/005, F21Y 115/10

(54) **PLANT GROWTH LAMP MODULE AND PLANT GROWTH LAMP USING THE SAME**

(30) Priority: 28.03.2017 CN 201710193947
(71) Applicant: Talent Key Holdings Limited, Kwun Tong (HK)
(72) Inventor: SZE, Wai PO, Kwun Tong (HK)
(74) Representative: Cabinet Chaillot

(57) **Abstract**

The present invention provides a plant growth lamp module (10) and a plant growth lamp using this module. A plurality of the plant growth lamp modules (10) can be connected. The module comprises a casing (110); a power supply (160) in the casing; a male socket (130) and a female socket (120) disposed on two inner sides of the casing respectively and electrically connected to the power supply; and a lighting unit (140) disposed in the casing and electrically connected to the power supply to emit light after energizing, which is transmitted outwards via a hole. The plant growth lamp in the present invention may have various adjustments to meet growth needs of various kinds of plants. Further, the plant growth lamp in the present invention enables plants to carry out photosynthesis even in an environment without sunlight and stimulate healthy growth of plants.

## Description

### TECHNICAL FIELD OF THE INVENTION

The present invention relates to the field of lighting, specifically to a plant growth lamp which may stimulate plant growth and photosynthesis.

### DESCIPTION OF THE BACKGROUND OF THE INVENTION

Light is an indispensable element to plant growth. Today, plant growth lamps have been massively used in some high-tech agricultural venues. However, the current plant growth lamps still cannot meet most of the needs of plant growth in many cases because most of the plant growth lamps in the present market have only a fixed lightening mode and emit only one type of fixed lamplight, can neither simulate natural sunlight, nor change lamplight based on the physiological characteristics of different plants in different growth periods and not to meet the needs of plant growth. Moreover, the fixation of lightening mode will result in increase of energy consumption due to power factor, thereby causing increase of cost. How to effectively utilize lamplight to reduce waste and quicken plant growth has become an issue on development of the plant growth lamp sector.

There are many plant growth lamps are provided in the prior art, aiming at plant growth. For example, Chinese patent publication CN103557480A discloses a plant growth lamp, comprising a lamp body, which is disposed over a plant and provides lamplight irradiation to plants for their growth; and a regulating mechanism, which is connected to the lamp body and regulates the vertical movement of the lamp body to adjust the distance between the light emitted by the lamp body and the irradiated plant. Although the invented lamp can regulate the height of lamplight based on the height and growth period of plants to change the quantity of light received by the plants in different stages and promote plant growth, the invented plant growth lamp cannot regulate the wavelength, color parameters and power of the light emitted by the lamp. Apparently, stimulating plant growth only by adjusting the distance of light irradiation is not enough and cannot meet diversified growth needs of different plants.

Therefore, it is urgent to make an advanced plant growth lamp to solve various problems in prior art, and provide lights with different wavelengths and color parameters based on growth of different plants and meet their needs.

### SUMMARY OF THE INVENTION

The object of the present invention is to solve the foregoing technical problems, provide a lamp for growth of different plants, and configure lighting units of different power and obtain lights with different wavelengths and different colors or their combinations through free combination and adjustment of modules in the plant growth lamp and based on the growth needs of different plants.

Therefore, according to one aspect of the present invention, the present invention provides a plant growth lamp module, which adopts the following technical solution:
a casing having a hole on its one end face for light passing therethrough;
a power supply disposed in the casing for providing electric energy;
a female socket disposed on an inner side of the casing, which is electrically connected to the power supply and is connectible to a male socket of another said plant growth lamp module;
a male socket disposed on another inner side of the casing, which is electrically connected to the female socket and is connectible to a female socket of another said plant growth lamp module; and
a lighting unit disposed in the casing and electrically connected to the power supply to emit light after energizing, which is transmitted outwards via the hole.

Preferably, the lighting unit is an LED light.

Preferably, the casing comprises a first casing member and a second casing member, which are mutually combined into one body, for example in a snapped or buckled manner. Further, the cross section of the casing is in a shape of 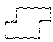 , square or rectangle.

According to an embodiment of the present invention, the module further comprises a radiator inside the casing to accelerate heat dissipation of the lighting unit.

Further, the module further comprises a lens, which is disposed on the hole of the casing in a fixed manner, and through which the light emitted by the lighting unit is transmitted.

Preferably, the female socket and the power supply are connected with a cable, and the female socket and the male socket are also connected with a cable.

Further, the female socket and the male socket are respectively provided with a plurality of slots to avoid outage.

According to one aspect of the present invention, the present invention provides a plant growth lamp. The plant growth lamp comprises the foregoing plant growth lamp modules and empty modules. Each empty module is disposed between two adjacent plant growth lamp modules and comprises:
a housing with a shape matching the casing of the plant growth lamp modules;
a female jack disposed on an inner side of the housing, and connected to the male socket of the plant growth lamp module;
a male jack disposed on another inner side of the housing, and connected to the female jack and the female socket of the plant growth lamp module.

Preferably the lighting units of a plurality of plant growth lamp modules of the plant growth lamp are configured to have different power respectively and emit lights with different wavelengths and different color parameters.

The plant growth lamp modules in the present invention may be designed to adopt double wiring of male sockets and female sockets of the lighting units to avoid work failure of subsequently connected modules in case one circuit is faulty. In other words, redundant design is adopted to reduce possibility of crash.

The lighting units of the plant growth lamp modules in the present invention may select high power or low power depending on using situation. Also, based on the using situation of the lighting units, it can get different wavelengths and different color parameters. The plant growth lamp in the present invention can help end users to effectively adjust and arrange the positions and quantity of the lighting units emitting lights with different wavelengths and different colors. Further, the plant growth lamp modules and empty modules may be spliced together in any quantity according to the real situation. Plant growth lamp modules and empty modules with different parameters are spliced together to emit lights with different wavelengths, different colors and different positions. It comes to be combined light source to adapt to the needs of plants of different varieties in different periods.

The adoption of the plant growth lamp in the present invention enables plants to carry out photosynthesis even in an environment without sunlight and stimulate healthy growth of plants. Moreover, the plant growth lamp is characterized by simple structure, energy conservation, environmental protection, low cost and adjustable use.

### BRIEF DESCRIPTION OF THE DRAWINGS

The present invention will be further illustrated with reference to the accompanying drawings and embodiments:
FIG. 1 is a schematic view of the internal structure and connecting wires of a plant growth lamp module in the present invention, in which a casing is not shown;
FIG. 2 is a section view of the overall structure of a plant growth lamp module in the present invention;
FIG. 3 is an exploded view of the structure of a plant growth lamp module in the present invention;
FIG. 4 is a schematic view for combination of a plurality of plant growth lamp modules in the present invention; and
FIG. 5 is an exploded view of a plurality of plant growth lamp modules shown in FIG. 4.

### DETAILED DESCRIPTION OF THE INVENTION

By referring to the following embodiments, the structures of the plant growth lamp module and the plant growth lamp using this module in the present invention are illustrated.

Terms "socket" and "jack" herein refer to a device through which one or more than one wire may be inserted and a circuit can be connected.

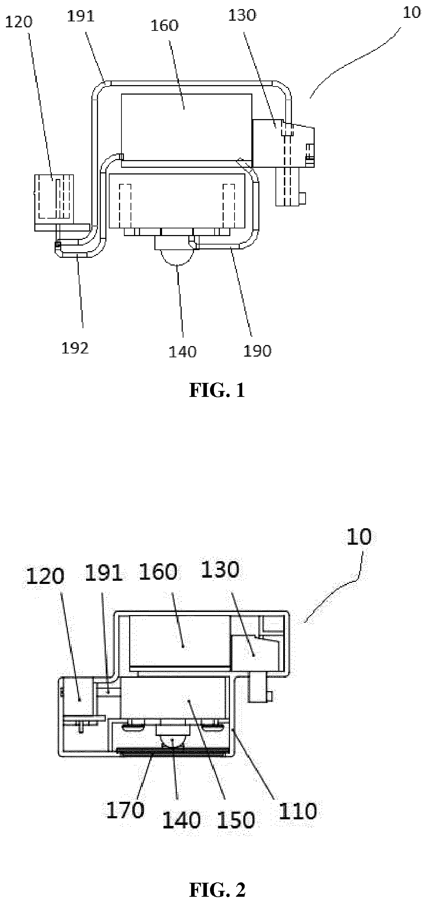

As shown in FIG.1-FIG.3, the plant growth lamp module 10 in the present invention comprises a casing 110. A lighting unit 140, a power supply 160, a male socket 130 and a female socket 120 are disposed in the casing 110.

The casing 110 may comprise a first casing member 111 and a second casing member 112 in order for easy installation, which are definitely matched each other. During assembling, they can be installed simply through combination. For example, the first casing member 111 and the second casing member 112 are provided with snap joints respectively and fixed into an integral body in a snap-in manner. The casing 110 is made of insulating and waterproof material, such as plastic material, like PE, PP or PVC, which can get and even fulfill the purpose of cost control, easy installation of the invention.

The casing 110 may adopt various appropriate shapes provided that it can combine a plurality of plant growth lamp modules 10 into one body through the male sockets 130 and the female sockets 120. For example, the cross section of the casing 110 may be square or rectangular. In an embodiment, the shape of the longitudinal cross section of the casing 110 is 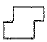 so that each of the upper and lower parts of the casing has a boss. The male socket 130 and the female socket 120 are respectively fixed on two inner sides of the casing 110. To be specific, the male socket 130 is located inside the boss in the upper part of the casing and its plug sticks out of the casing 110, while the female socket 120 is located inside the boss in the lower part of the casing 110.

A hole 113 is disposed on one surface of the casing 110 so that the light emitted by the lighting unit 140 can be transmitted outwards via the hole 113 of the casing 110.

The power supply 160 is disposed in the casing 110 to provide electric energy to the lighting unit 140. The female socket 120 and the male socket 130 are provided with a plurality of slots to avoid failure of light emission in case of outage. Further, the power supply 160 further plays a role of voltage transformation. In other words, when the module 10 is connected to an external power supply for use, power may be outputted and supplied to the lighting unit 140 after voltage transformation of the power supply 160.

According to one embodiment of the invention, the module 10 further comprises a lens 170. It is installed on the hole 113 arranged on the casing 110 and is aligned with the lighting unit 140. The light emitted by the lighting unit 140 is condensed after it passes the lens 170 so that the emitted light will not diverge and the lighting effect is even better.

The lighting unit 140 can use different lamps, such as LED lights or halogen lights. In the plant growth lamp module 10, lamps with different luminance and different power may be configured according to needs or may be configured to emit lights with different wavelengths and different color parameters to coordinate with the growth needs of different plants in different areas and different seasons.

Preferably, inside the module 10, only cables are used to realize electric connection. For example, the male socket 130 and the female socket 120 are connected with a cable 191, the female socket 130 and the power supply 160 are connected with a cable 192, and the lighting unit 140 and the power supply 160 are connected with a cable 190, as shown in FIG. 1. When a plurality of plant growth lamp modules 10 are connected together, adjacent male and female sockets are connected, and the power supply 160 is directly connected to the lighting units 140. Such double wiring design may avoid work failure of subsequently connected modules in case one circuit is faulty. In other words, redundant design is aimed at reducing crash possibility.

The plant growth lamp module 10 further comprises a radiator 150 disposed in the casing 110. For example, the radiator 150 may be installed on the casing 110, face directly the lighting unit 140 and be fixed by screws.

All of the foregoing components in the casing 110 may be fixed in an appropriate manner. For example, they are fixed by screws 180. Alternatively, in the casing 110, a plurality of grids adaptable to the sizes of all components may be disposed to snap-fit all of the foregoing components into these grids.

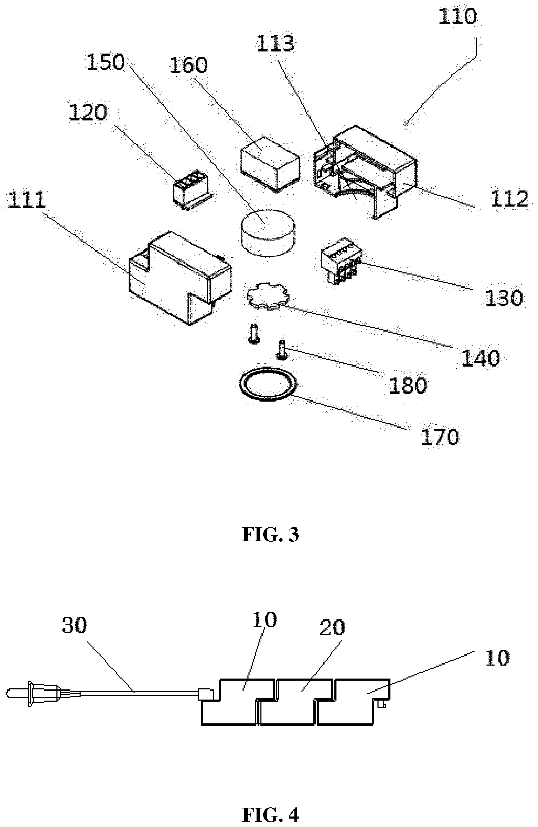

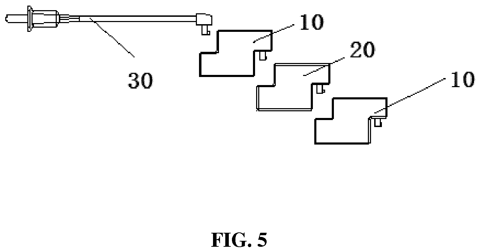

As shown in FIG. 4 and FIG. 5, the present invention further provides a plant growth lamp. The plant growth lamp comprises a plurality of the foregoing plant growth lamp modules 10 and empty modules 20. Each empty module 20 is disposed between two adjacent plant growth lamp modules 10 and comprises:
a housing with a shape matching the casing 110 of the plant growth lamp module; a female jack disposed on an inner end of the housing and connected to the male socket 130 of the plant growth lamp module; and a male jack disposed on another inner end of the housing, and connected to the female jack 120 and the female socket 120 of the plant growth lamp module.

A plug 30 of an external power supply is connected to one of the modules in the plant growth lamp in an inserted manner so that the lamp is connected to an external circuit and power is supplied to the lighting units 140 after voltage transformation of the internal power supply 160.

Apparently, the empty modules 20 only plays a role of circuit connection, so they only need to realize mutual connection of sockets, and match the plant growth lamp modules 10 in shape. For example, the empty modules 20 adopts a shape consistent with the shape of the plant growth lamp modules 10, for example, an empty module 20 only comprises a housing, a male socket 13 or a female socket 120 of the plant growth lamp module 10, as well as connecting wires.

If it is necessary, the lighting unit 140 of the plant growth lamp module 10 in the plant growth lamp is configured to be a lighting unit emitting lights with different wavelengths, different color parameters and different power.

The plant growth lamp modules 10 and the empty modules 20 can be combined together in any quantity based on real situation. By combining the plant growth lamp modules 10 and the empty modules 20 with different parameters together, a combined light source emitting lights with different wavelengths, different colors and different positions can be obtained to adapt to the needs of plants of different varieties during different growing periods in flexible way.

To sum up, the plant growth lamp in the present invention can use various adjustments to meet growth needs of various kinds of plants. Further, the plant growth lamp in the present invention enables plants to carry out photosynthesis even in an environment without sunlight and stimulate healthy growth of plants. Moreover, the plant growth lamp is characterized by simple structure, energy conservation, environmental protection, low cost and adjustable use.

It should be appreciated that the foregoing descriptions are preferred embodiments of the present invention and are not intended to limit the present invention. For those skilled in the art, the present invention may have various changes and modifications. All modifications, identical replacements and improvements made without departing from the spirit and principle of the present invention shall be within the protection scope of the present invention.

## Claims

1. A plant growth lamp module, in which a plurality of the modules can be mutually connected in a detachable manner; **characterized in that** each module comprises:
a casing having a hole on its one end face for light passing therethrough;
a power supply disposed in the casing for providing electric energy;
a female socket disposed on an inner side of the casing, which is electrically connected to the power supply and is connectible to a male socket of another said plant growth lamp module;
a male socket disposed on another inner side of the casing, which is electrically connected to the female socket and is connectible to a female socket of another said plant growth lamp module; and
a lighting unit disposed in the casing and electrically connected to the power supply to emit light after energizing, which is transmitted outwards via the hole.

2. The module according to claim 1, **characterized in that** the casing comprises a first casing member and a second casing member, which are mutually combined.

3. The module according to claim 1, **characterized in that** the longitudinal cross section of the casing is in a shape of 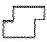 , square or rectangle.

4. The module according to claim 1, **characterized in that** the model further comprises a radiator disposed in the casing to improve heat dissipation of the lighting unit.

5. The module according to claim 1, **characterized in that** the model further comprises a lens disposed on the hole of the casing in a fixed manner, through which light emitted by the lighting unit is transmitted.

6. The module according to claim 1, **characterized in that** the female socket and the power supply are connected by a cable, and the female socket and the male socket are also connected by a cable.

7. The module according to claim 1, **characterized in that** the female socket and the male socket are respectively provided with a plurality of slots to avoid outage.

8. The module according to claim 1, **characterized in that** the lighting unit is an LED light.

9. A plant growth lamp comprising a plurality of plant growth lamp modules according to anyone of the preceding claims and empty modules; **characterized in that** each empty module is disposed between two adjacent plant growth lamp modules and each empty module comprises:
a housing with a shape matching the casing of the plant growth lamp module;
a female jack disposed on an inner side of the housing, and connected to the male socket of one of the plant growth lamp modules; and
a male jack disposed on another inner side of the housing, electrically connected to the female jack, and connected to the female socket of one of the plant growth lamp modules.

10. The plant growth lamp according to claim 9, **characterized in that** the lighting units of a plurality of the plant growth lamp modules of the plant growth lamp are configured to have different power respectively and emit lights with different wavelengths and different color parameters.

11. The plant growth lamp according to claim 9, **characterized in that** in the empty modules, the female jacks and the male jacks are connected with cables.

12. The module according to claim 9, **characterized in that** the lighting unit is an LED light.
